# EUROPEAN PATENT SPECIFICATION

(11) **EP 1 700 386 B1**
(45) Date of publication and mention of the grant of the patent: **31.10.2012**
(21) Application number: 04798922.3
(22) Date of filing: 18.11.2004
(51) Int. Cl.: H04B 1/69

(54) **ROBUST NON-COHERENT RECEIVER FOR PAM-PPM SIGNALS**
ROBUSTER NICHTKOHÄRENTER EMPFÄNGER FÜR PAM-PPM-SIGNALE
RECEPTEUR NON COHERENT ROBUSTE POUR SIGNAUX MIA/IMP

(30) Priority: 02.01.2004 EP 04000004
(43) Date of publication of application: 13.09.2006
(73) Proprietor: International Business Machines Corporation, Armonk, NY 10504 (US)
(72) Inventor: HIRT, Walter, CH-8907 Wettswil (CH); WEISENHORN, Martin, CH-8803 Rueschlikon (CH)
(74) Representative: Ragot, Sébastien Pierre
(86) International application number: PCT/IB2004/003798
(87) International publication number: WO 2005/074150

(56) References cited:
- US-A1- 2002 196 845
- US-A1- 2003 108 133
- HO M ET AL: "A differential detector for an ultra-wideband communications system" VTC SPRING 2002. IEEE 55TH. VEHICULAR TECHNOLOGY CONFERENCE. PROCEEDINGS. BIRMINGHAM, AL, MAY 6 - 9, 2002, IEEE VEHICULAR TECHNOLGY CONFERENCE, NEW YORK, NY : IEEE, US, vol. VOL. 1 OF 4. CONF. 55, 6 May 2002 (2002-05-06), pages 1896-1900, XP010622146 ISBN: 0-7803-7484-3

## Description

### Field of Invention

The present invention relates to a robust receiver scheme for communicating via ultra-wideband (UWB) radio transmission signals over multi-path channels with a very broad range of delay spread. The scheme enables the construction of particularly robust receivers for systems and networks operating over the UWB (or impulse) radio channel, for example, in the frequency band between 3.1 GHz and 10.6 GHz.

### Background

Short-range wireless technologies in the wireless local area network (WLAN) space as well as wireless personal and body area networks (WPAN and WBAN) continue to proliferate rapidly. Similarly, wired and wireless as well as mixed networks linking a variety of sensors and/or identification tags are just beginning to be deployed with an unprecedented future market potential. Typically, these conventional systems operate license-free within narrow but designated radio spectrum bands. To mitigate the threat of a future spectrum shortage in view of the rapidly growing user and device population and to enable new applications based on wireless data transmission as well as asset localization and tracking, additional radio spectrum in the form of the ultra-wideband (UWB) radio channel was recently made available for use in the USA in the range 3.1 GHz - 10.6 GHz.

A relevant aspect in the development of future wireless sensor systems using the UWB radio channel is the receiver's robustness in propagation conditions where severe multi-path conditions prevail. At the same time, however, these communication devices should minimize their power consumption, since often they are powered by batteries.

### Prior Art and Problem Description

Designers of wireless devices (transceivers) for communication, identification or localization systems based on ultra-wideband radio technology (UWB-RT) are faced with the problem of choosing the best possible design approach in the sense that it is cost effective, provides robust performance and operates only on batteries over an extended time, up to several years. A key design criteria in such wireless transceivers are thus the choice of the modulation scheme and the corresponding receiver architecture for a given propagation environment. The problem with (indoor) UWB radio channels is posed by the rather large range of delay spread that can be observed in the channel response, ranging from nearly zero delay spread, in line of sight situations, to large delay spreads of up to 200 ns and more in situations of severe multi-path propagation. A practical receiver should be able to cope with this large range of possible channel conditions.

There exist two basic schemes from which to derive a receiver's architecture: a) coherent schemes and b) non-coherent schemes. Well designed coherent schemes provide good performance but require a rather complex implementation, since often they need to be designed with adaptive features to match all possible channel conditions. Non-coherent receivers have the advantage of being much simpler and thus less complex to build; the compromise is that non-coherent receivers generally suffer from a substantial performance loss in comparison with well-designed coherent receivers.

Therefore, there is a need in the art for an improved non-coherent receiver scheme that achieves a similar or even better performance as, e.g., a coherent RAKE receiver of low order. The non-coherent receiver architecture should provide for robust error rate performance over a large range of multi-path delay spread conditions without need of any adaptation of key system parameters in response to varying channel delay spread or slowly drifting transmitter clock.

Certain coherent and non-coherent receiver architectures suitable for the UWB radio channel and the reception of pulse amplitude modulation (PAM) and/or pulse position modulation (PPM) signals have been generally described in the recent literature. For example, in the IEEE publication entitled "On the achievable rates of ultra-wideband PPM with non-coherent detection in multi-path environments," by Y. Souilmi and R. Knopp, the authors describe theoretical results on achievable data rates of UWB systems using m-ary (m slots per PPM symbol) PPM with non-coherent receivers in multi-path fading environments. However, the paper does not disclose what the receiver structure would be nor does it explain how such a receiver would recover the timing phase of the transmitted PPM signal. Knowledge of the received signal's timing phase is important to achieve good error rate performance at the receiver's data detector output.

The paper published in the IEEE Journal on Selected Areas in Communications, vol. 20, No. 9, December 2002, and entitled "The effects of timing jitter and tracking on the performance of impulse radio," by W. M. Lovelace and J. K. Townsend, addresses the timing recovery and jitter problem for orthogonal 4-ary PPM and binary offset PPM for *impulse radio,* which is commonly understood to be the same as (pulsed) UWB radio. The authors show that coherent receivers with an early-late gate tracker are very sensitive, even to modest timing errors (jitter), mainly due to the very narrow pulses sent by the transmitter. The paper by Lovelace and Townsend assumes that the channel response is known to the receiver or that it can be accurately estimated; however, channel estimation requires complex signal processing.

Known coherent and non-coherent receivers, typically are based on some automatic gain control (AGC) function, particularly when operating in an interference environment. Moreover, there is a need for non-coherent receivers of low complexity, capable of providing robust operation when receiving transmission signals over a large set of UWB (or impulse) radio channels.

From the above it follows that there is still a need in the art for an improved non-coherent receiver scheme which, for example, does not rely on any channel response estimation, particularly in the case where the channel is the UWB (or impulse) radio channel.

The document US 2003108133 (A1) relates to an ultra-wideband (UWB) radio communications system. More specifically, it relates to the transmission, reception, detection, and synchronization of time-separated reference and data pulses that are communicated in a transmitted-reference (TR) pulse train. According to one aspect, a TR-UWB receiver receives TR pulses comprising reference and data pulses separated by a delay, D. The receiver includes a multiplier having a first input for inputting a data pulse. A delay circuit delays a reference pulse by D and inputs the delayed reference pulse to a second input of the multiplier. An integrator integrates the output of the multiplier. A baseband signal resulting from integration of the output of the multiplier is demodulated for recovering the communicated data. Preferably, a gating circuit limits the noise captured prior to the integrator in response to a gating signal generated during a time fixed or variable gating time interval. In one exemplary embodiment, the gating time interval is relative to the timing of the reference and/or data pulses. Also, the gating function in accordance with this document can be based on a weighting profile. Typically, a feedback circuit, preferably having a gain of less than 1, combines forward and feedback noise non-coherently to improve received signal-to-noise ratio (SNR). A hybrid approach in accordance with this document combines the gating circuit and the feed back circuit. Under this approach, the gating circuit limits the amount of captured noise and the non-coherent addition of the feed back and forward noise further increases the SNR. FIG. 12 of this document represents a TR receiver system employing tracking in accordance with an embodiment. The output block 57 provides a signal performance measurement 60, such as signal strength, to a gate timing controller 61, which may contain a filter or other algorithm to control loop dynamics. The output of the gate timing controller 61 feeds the gate timing circuit, which controls the time positioning of the gate. For example, the gate is displaced in time periodically and a signal performance parameter such as signal strength or signal to noise ratio or bit error rate is evaluated synchronously with the periodic displacement of the gate position. An error signal resulting from this performance parameter evaluation is then provided to a control system to position the nominal gate position more advantageously based on the error signal. The control system may be a control loop filter that averages the error signal over time to reduce noise in the control loop and to insure proper feedback dynamics.

### Summary and Advantages of the Invention

The present invention provides a robust scheme for communicating via ultra-wideband (UWB) radio transmission signals over multi-path channels with a very broad range of delay spread. In general, the scheme comprises a non-coherent receiver structure of low complexity and potentially very low power consumption, while offering robust error rate performance for a wide variety of UWB multi-path channels. Use of proposed transmission signals, referred to as combined PAM-PPM (pulse amplitude modulation - pulse position modulation) signals, together with the disclosed non-coherent receiver method and receiver are applicable in any UWB communication, identification, sensor or localization system and network, where battery power consumption should be minimized without undue system performance degradation. In particular, timing phase recovery and synchronization methods and embodiments for bipolar 2PPM (also abbreviated as BP2PPM) signals are disclosed, enabling the construction of particularly robust receivers for systems and networks operating over the ultra-wideband (UWB) radio channel, for example, in the frequency band between 3.1 GHz and 10.6 GHz.

According to a first aspect of the invention, there is provided a method for receiving a transmission signal TS on a set of impulse radio (UWB) channels for detecting data, each channel comprising a set of multi-path components and each multi-path component influencing a resulting bit error rate (BER). The method comprises the steps of i.) receiving the transmission signal TS via a first received signal path (also abbreviated as FRSP), ii.) integrating an output of the first received signal path during an integration time T*_{I}* to obtain an integrator signal IS, and iii.) processing the integrator signal IS further for detecting the (transmitted) data. The integration time T*_{I}* is chosen such as to influence the bit error rate (BER).

The step of integrating can further comprise the steps of determining a weight function *w*(t), multiplying the output of the first received signal path with the determined weight function *w*(t) to obtain a product signal PS, and integrating the product signal PS during the determined integration time T*_{I}* to obtain a weighted integrator signal wIS. The weighted integrator signal wIS can then be used for further processing and detecting the data. The determination of the weight function *w*(t) can comprise a selection of the weight function *w*(t), e.g. form a table or pre-stored weight function data, or can comprise an adjustment of the weight function *w*(t) in dependence on the results of channel measurements. By weighting the output signal of the first receiver path with an appropriate weighting signal, the bit error rate (BER) can be further reduced and the sensitivity of the receiver can be increased.

Moreover, the step of processing can further comprise the steps of sampling the integrator signal IS to obtain a sampled analog signal SAS, quantizing the sampled analog signal SAS to signal samples SS, using the signal samples SS for data detection decisions, and controlling the sampling of the integrator signal IS in dependence on the signal samples SS and using the data detection decisions for timing phase estimation. Sampling at a certain multiple (the multiple depends on the modulation scheme) of the symbol rate is usable to perform data detection. The same samples can be used to perform the fine symbol clock estimation (if desired, also for the coarse symbol clock estimation), the sync-sequence search and the timing tracking.

The disclosed non-coherent reception scheme provides for robust bit error rate (BER) performance over a large range of multi-path delay spread channel conditions without need of any adaptation of key system operation parameters in response to varying channel delay spread or slowly drifting transmitter clock. Given that the target channel is the UWB radio channel, it is proposed to use a modulation scheme based on combining PAM (pulse amplitude modulation) and PPM (pulse position modulation); in particular, in a preferred embodiment it is proposed to use bipolar 2PPM (BP2PPM) signals, where the polarity of the pulses does not carry any information but is used to achieve a whitened and DC-free (DC = "direct current" = zero frequency) transmission spectrum. The transmission signal TS can be selected to be a combined PAM-PPM transmission signal, preferably combined as a BP2PPM signal. 2PPM allows transmitting of 1 bit per symbol. Binary PAM in combination with 2PPM allows to choose the sign of the pulse at random and thus to obtain a transmit signal with a power spectral density that contains no spectral lines. The proposed non-coherent receiving methods and embodiments are particularly well suited for transmission signals received over UWB radio channels.

It is also possible to use two signal samples SS per bipolar 2PPM symbol in order to provide maximum-likelihood decisions for the data detection decisions. This means two samples are used per symbol, which allows for designing an improved data detector that provides a low bit error rate (BER), while keeping the transceiver architecture simple.

According to a second aspect of the invention, there is provided a receiver for receiving a transmission signal TS on a set of impulse radio (UWB) channels for detecting data, each channel comprising a set of multi-path components and each multi-path component influencing a resulting bit error rate (BER). The receiver comprises a first received signal path (previously also abbreviated as FRSP) for receiving the transmission signal TS, an integrator for integrating an output of the first received signal path during an integration time T_{I} to obtain an integrator signal IS, and a further processing unit for processing the integrator signal IS further for detecting data, the integration time T_{I} of the integrator being chosen such as to influence the bit error rate (BER). The provided receiver is a non-coherent receiver and has the advantage that any channel estimation can be omitted for this non-coherent receiver in contrast to coherent receivers. With an appropriate choice of the integration time T*_{I}*, most of the received signal energy is captured by the integrator, thus, almost the entire multi-path diversity offered by the channel can be exploited efficiently. The recovered symbol clock's timing phase estimation error is allowed to be significantly higher for this non-coherent receiver compared to coherent receivers.

In an embodiment, the integrator is a weighting integrator that comprises a generator for providing a weight function *w*(*t*), a multiplier for multiplying the output of the first received signal path with the weight function *w*(*t*) to obtain a product signal PS, and an integrator for integrating the product signal PS during the integration time T*_{I}* to obtain a weighted integrator signal wIS. Weighting the output signal of the first received signal path with the weight function *w*(*t*) leads to a reduced bit error rate (BER) of the receiver or to an increased sensitivity of the receiver.

The further processing unit can comprise a sampler for sampling the weighted integrator signal wIS to a sampled analog signal SAS, a quantizier for quantizing the sampled analog signal SAS to signal samples SS, a data detector for data detection decisions, and a timing unit for controlling the sampling in dependence on the signal samples SS and the data detection decisions for timing phase estimation.

The timing unit can further comprise a timing acquisition & data synchronization unit that includes a coarse symbol clock estimation unit, a fine symbol clock estimation unit, and a synchronization sequence search unit. Splitting the symbol clock timing phase estimation step into coarse and fine symbol clock estimation steps allows, depending on the implementation, to reduce preamble length and to improve the estimation quality.

Furthermore, the timing unit can further comprise a timing tracking unit that includes an early-zero-late time generator or an early-late time generator. In this disclosure, the proposed non-coherent receiver includes generally a modified early-late gate timing scheme in the form of a three-state adjustment scheme, hereafter called early-zero-late (EZL) timing scheme. In some embodiments it might be preferable that the zero state is not active, reducing it to the classic early-late scheme. The combination of this scheme with efficient non-coherent data detection leads to an UWB radio transmission system that achieves a robust performance over a wide range of channel conditions (delay spread), even in the presence of some timing phase errors due to jitter and/or frequency offset between transmitter and receiver time bases (symbol clocks). The mentioned paper by Lovelace and Townsend assumes that the channel response is known to the receiver or that it can be accurately estimated; however, channel estimation requires complex signal processing. The proposed non-coherent receiver does not rely on any channel response estimation.

Preferably, the timing tracking unit comprises a decision-directed sampling time correction unit which allows for improving the performance of timing-tracking algorithms, resulting either in a higher receiver sensitivity or a higher tolerance against oscillator frequency (transmitter and/or receiver symbol clock) imprecision.

The timing unit can comprise an integrator/sampler control unit in combination with a state machine, which allows a precise controlling of a) the reset signal and the weight select signal provided to the integrator and b) the sampling signal provided to the sampler.

Moreover, the received transmission signal TS can be processed by several integrators arranged as a set of parallel operating integrators. Then, each integrator integrates their respective input signals during a predetermined integration time or an adjustable integration time. Each integrator can also perform as a weighting integrator. In other words, the integration of the signal obtained from the first received signal path by a single integrator or weighting integrator is expandable to include several such integrators arranged as a set of parallel operating integrators, each integrator integrating their respective input signals during the predetermined or adjustable integration time. Such a parallel integrator arrangement offers additional advantages, e.g. less required time delay in the timing tracking unit (i.e. an integer n of an delay element of an leaky integrator can be chosen to be unity); more precise information about the timing error TE provided by the decision-directed sampling time correction unit is obtainable, thereby increasing the accuracy of the timing error TE estimate; improved robustness against clock frequency offset between transmitter symbol clock and receiver symbol clock is achievable; and a shorter preamble sequence can be used for obtaining a faster acquisition time.

The integration time T*_{I}*, as determinable by a sampler control unit, can be made adjustable in response to the prevailing channel conditions, particularly in response to the channel's actual power delay profile as measured at the output of the first received signal path. Thus, if a delay element of duration T*_{Ia}* is made adjustable, then the receiver's achievable bit error rate (BER) can also be improved in dependence of the prevailing channel's power delay profile and/or the receiver's signal-to-noise ratio (SNR). Note that the measured power delay profile of a channel can also be used to derive an optimal weight function *w*(*t*) which can be incorporated in the weighting integrator.

According to a third aspect of the invention, there is provided a system for transmitting data via a set of impulse radio (UWB) channels. The system comprises a transmitter for sending the data as a combined PAM-PPM signal, and the mentioned receiver for receiving and detecting the data.

Further advantages of the invention are listed below:
- Use of the proposed transmission signals, referred to as combined PAM-PPM (pulse amplitude modulation - pulse position modulation) signals, together with the disclosed non-coherent receiver method and apparatus are applicable in any UWB radio communication, identification, sensor or localization system and network, where battery power consumption should be minimized without undue system performance degradation.
- In particular, ways for integration of signals provided by a first received signal path and for timing recovery and synchronization of bipolar 2PPM (bipolar two-slot PPM, also abbreviated as BP2PPM) signals are disclosed, enabling the construction of particularly robust receivers for systems and networks operating over a broad set of ultra-wideband (UWB) radio channels, for example, UWB channels in the frequency band between 3.1 GHz and 10.6 GHz.
- Non-coherent receivers have the advantage of being much simpler and thus less complex to build; the compromise is that non-coherent receivers generally suffer from some performance loss in comparison with well-designed coherent receivers. The non-coherent receiver scheme as disclosed in here enable to reduce such performance losses; this disclosure describes a non-coherent receiver that achieves a similar performance as a coherent RAKE receiver of low order.
- In a preferred embodiment the receiver's performance has been shown to be robust in the presence of timing phase errors or clock frequency offsets up to 20 ppm (parts per million), particularly in the case where the detector is supplied with two samples per bipolar 2PPM symbol to provide (optimal) maximum-likelihood decisions.

### Description of the Drawings

Preferred embodiments of the invention are described in detail below, by way of example only, with reference to the following schematic drawings.
Fig. 1 shows a basic scenario for transmitting data via a set of radio channels.
Fig. 2 shows a preferred embodiment of a non-coherent receiver structure for the reception of combined PAM-PPM signals.
Fig. 3 shows a block diagram of a data detector comprising a delay element, an adder and a threshold detector.
Fig. 4 shows a timing acquisition & data synchronization unit.
Fig. 5 shows a block diagram of a timing tracking unit.
Fig. 6 shows a basic diagram of a state machine that is part of an integrator/sampler control unit.
Fig. 7a shows a basic symbol sampler control unit as included in the integrator/sampler control unit.
Fig. 7b shows the general relation between the various signals provided by the basic symbol sampler control unit.
Fig. 8a shows an embodiment of an integrator as a weighting integrator.
Fig. 8b indicates, by way of an example UWB radio channel, that the optimal integration time T*_{I}* also depends on the prevailing signal-to-noise ratio (SNR) at the receiver.

The drawings are provided for illustrative purpose only and do not necessarily represent practical examples of the present invention to scale.

### Description of Preferred Embodiments

The embodiments are described with the focus put on applications to wireless systems, using impulse radio which is commonly understood to be the same as (pulsed) ultra-wideband (UWB) radio.

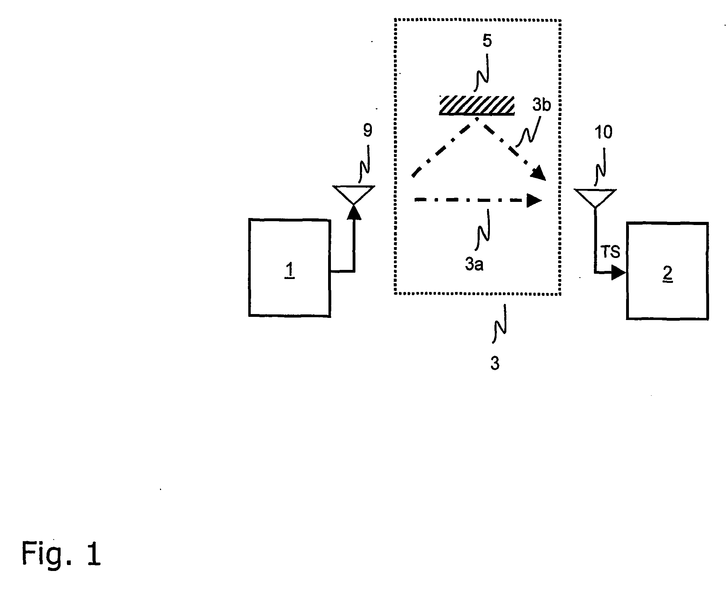

Fig. 1 shows a basic scenario for a system for transmitting data via a set of radio channels, i.e. a set of impulse radio (UWB) channels 3. For the sake of simplicity, only one radio channel 3 is indicated. The figure illustrates on the one hand a transmitter 1 with a transmit antenna 9 and on the other hand a non-coherent receiver 2 with a reception antenna 10. The indicated radio channel 3 comprises a set of multi-path components 3a, 3b, where a transmission signal TS is received at the non-coherent receiver 2 via one multi-path component 3a directly and is received via another multi-path component 3b that includes a reflection on a wall 5. In general, each radio channel 3 is characterized by a large number of the multi-path components 3a, 3b that can be spread over a wide range of time intervals (delay spread). Each multi-path component influences a resulting bit error rate (BER) in the non-coherent receiver 2. The further description refers in more detail to the non-coherent receiver 2, hereafter also referred to as receiver 2. The same reference numbers and signs are used within the description to denote the same parts or the like.

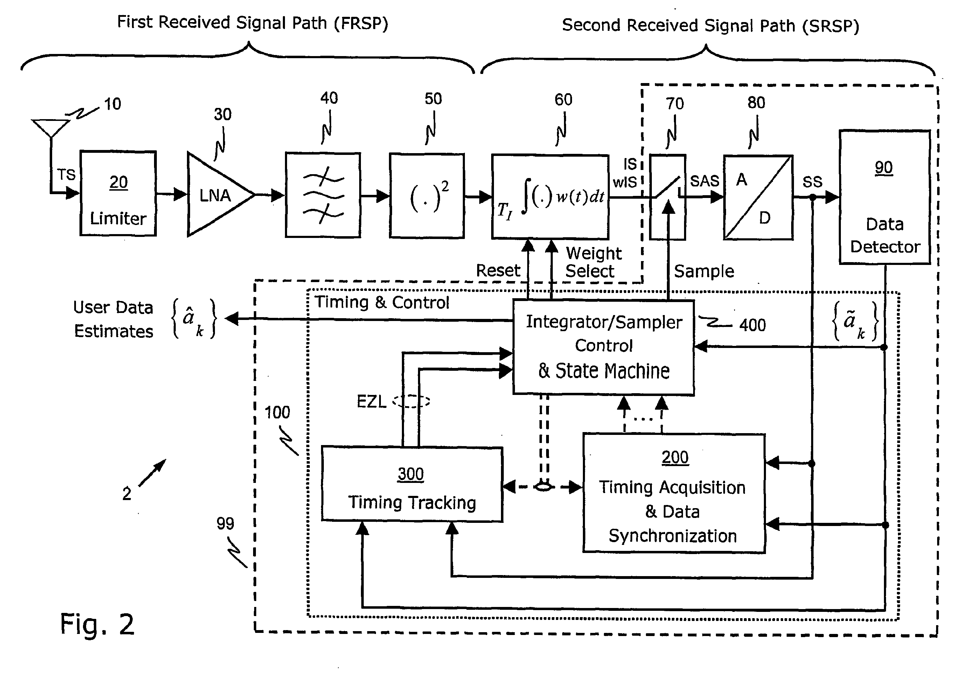

Fig. 2 shows a non-coherent receiver structure of the receiver 2 for the reception of combined PAM-PPM signals. The receiver 2 comprises a first received signal path (FRSP) 10 - 50, a second received signal path (SRSP) 60 - 90 and a timing & control unit 100, also referred to as timing unit 100. The first received signal path includes in a signal processing chain the reception antenna 10 that receives the transmission signal TS, a limiter 20 that limits its output signal in terms of its amplitude, a low noise amplifier (LNA) 30, a bandpass filter 40 that passes the received transmission signal TS, and a squarer 50. The second received signal path comprises an integrator 60, a sampler 70, a quantizer (analog-to-digital converter) 80, and a data detector 90. The timing unit 100 relates to the components comprised in the second received signal path in that it receives signals from such components 80, 90 or provides signals to such components 60, 70. The sampler 70, the quantizer 80, the data detector 90, and the timing unit 100 are herein also referred to as further processing unit 99.

The integrator 60 integrates an output of the first received signal path during an integration time T*_{I}* to obtain an integrator signal IS or a weighted integrator signal wIS. The signals are indicated in the figure respectively.

The sampler 70 samples the integrator signal IS or the weighted integrator signal wIS to provide a sampled analog signal SAS. The quantiziser 80 quantizes the sampled analog signal SAS to obtain signal samples SS which are then used by the data detector 90 for data detection decisions.

The timing & control unit 100 comprises a timing acquisition & data synchronization unit 200, a timing tracking unit 300, and an integrator/sampler control & state machine unit 400 that includes the functionality of a state machine. The timing acquisition & data synchronization unit 200 is also referred to as acquisition & synchronization unit 200. In general the timing unit 100 controls the sampling in dependence on the signal samples SS and the data detection decisions for obtaining a timing phase estimate. The timing unit 100 outputs a "Reset" and "Weight Select" signal, which are both used to control the integrator 60, and further outputs a "Sample" signal that is used by the sampler 70 for precise sampling of the integrator signal IS or the weighted integrator signal wIS.

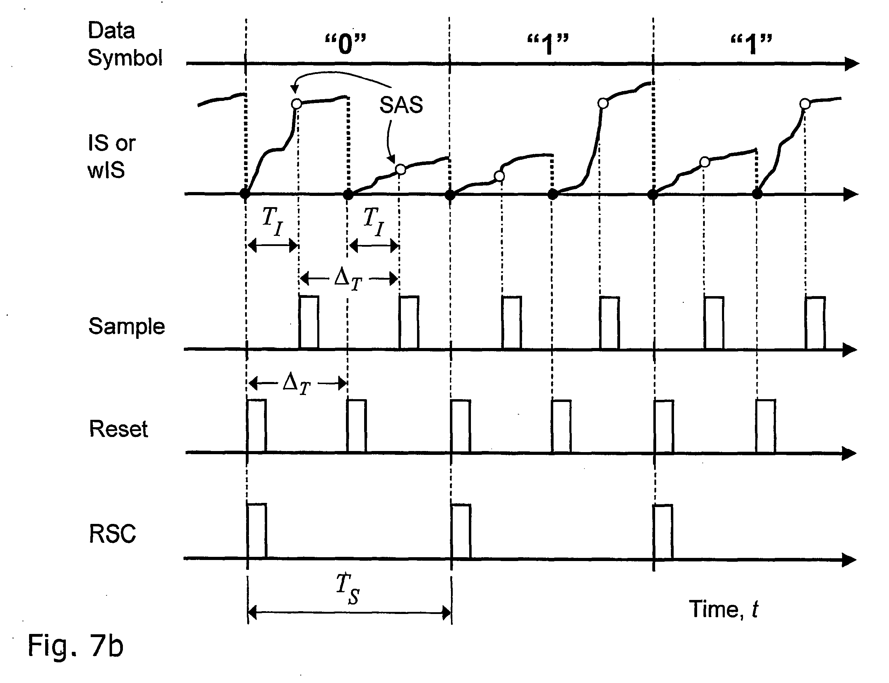

The timing & control unit 100 provides the the "Reset" signal, the "Sample" signal, and the "Weight Select" signal to the second received signal path (SRSP). The "Weight Select" signal is preferably issued at the beginning of a reception cycle, e.g. before a new data packet is received; however, in general, the "Weight Select" signal can be activated when the receiver processes some transmission signal TS. When the "Reset" signal changes state, e.g. from some low (zero) amplitude value to a high amplitude value, then the integrator's 60 output is set to zero. From the time instant where the integrator's 60 output is set to zero, the timing unit 100 provides the "Sample" signal after the integration time T*_{I}* to the sampler 70, which generates a new sampled analog signal SAS. In a preferred embodiment two such samples are generated within each symbol interval T*_{S}*. Fig. 7b shows further details of the general relation between the signals provided by within the timing & control unit 100. Further shown in Fig. 7b is the receiver's recovered symbol clock (RSC) signal, which is controlled by the timing acquisition & data synchronization unit 200 during preamble and synchronization sequence reception and is further controlled by the timing tracking unit 300 during data signal reception. The timing & control unit 100 provides also the user data estimates {â*ₖ*}*,* which are delivered by the data detector 90 via the integrator/sampler control & state machine unit 400.

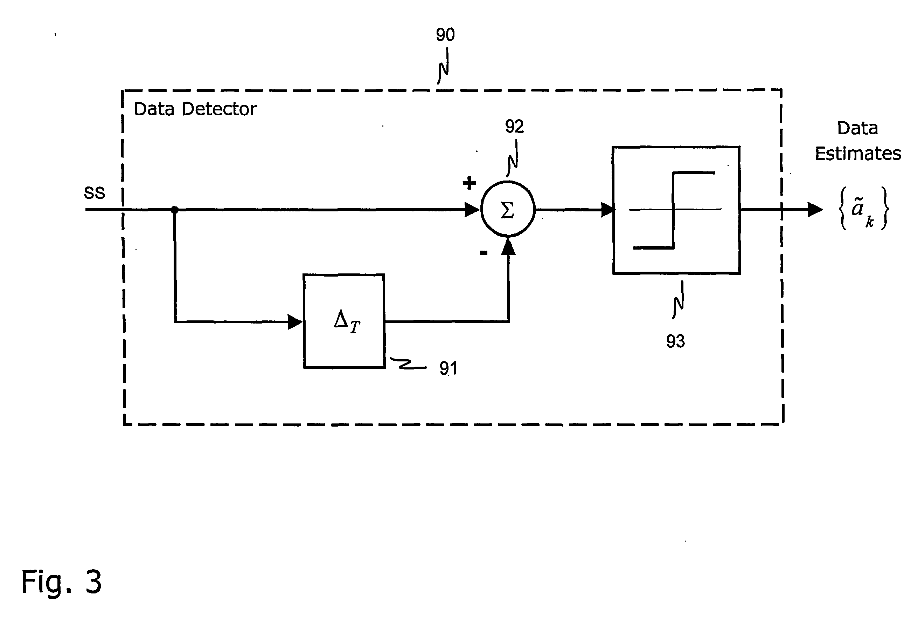

Fig. 3 shows a block diagram of the data detector 90 comprising here a delay element 91, an adder 92 and a threshold detector 93. The data detector 90 receives the signal samples SS from the quantizer 80 and feeds them to the adder 92 and the delay element 91. Adder 92 subtracts the output provided by the delay element 91 from the signal sample SS and provides the result, obtainable at its output, to the threshold detector 93 for the generation of the data estimates {ã*ₖ*}. Therefore, the threshold detector 93 provides data estimates based on the difference between a first and a second signal sample SS generated during the same received symbol interval. In a preferred embodiment the transmitted and thus received symbols are bipolar 2PPM (BP2PPM) symbols.

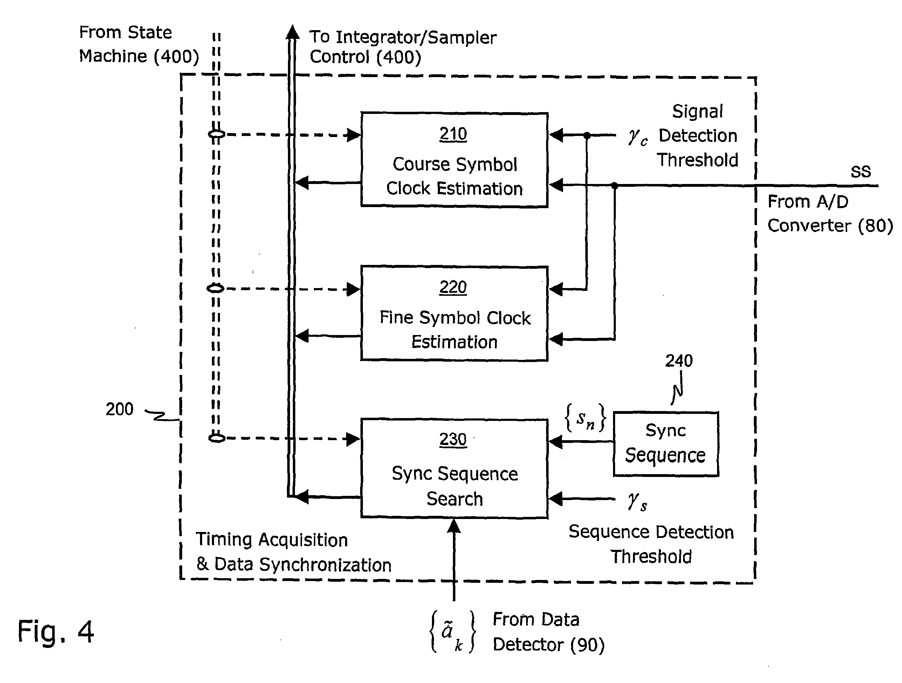

Fig. 4 shows the timing acquisition & data synchronization unit 200 comprising a course symbol clock estimation unit 210 that is also referred to as course sampling time estimation unit 210, a fine symbol clock estimation unit 220 that is also referred to as fine sampling time estimation unit 220, a synchronization sequence search unit 230 that is also referred to as sync search unit 230, and the sync sequence (storage) unit 240.

Within the timing acquisition & data synchronization unit 200 the signal samples SS provided by the quantizer 80 are fed to both the course symbol clock estimation unit 210 and fine symbol clock estimation unit 220, where they are used to generate the recovered symbol clock RSC in conjunction with the signal detection threshold *γ*_{c}. The clock recovery mechanism used by course symbol clock estimation unit 210 can be based on any suitable algorithm know within the art. The fine symbol clock estimation unit 220 makes preferably use of an early-zero-late (EZL) sampling time generator 310.

The sync search unit 230 comprises a sync sequence detector that can be a soft detector or a hard detector. A soft detector adds the amplitudes at the sampling instances; when the resulting sum exceeds a certain threshold value then the sync sequence is assumed to be found. A difficulty of this method is to derive the optimum (adaptive) threshold value, which depends on the amplitude of the received signal and therefore demands estimation of the signal-to-noise ratio (SNR).

In a preferred embodiment, hard detection for the sync sequence search is used based on a symbol-wise detection method to produce a resulting detected symbol sequence; a determined sync sequence {S*ₙ*} provided by the sync sequence (storage) unit 240 is then searched in this detected symbol sequence. As symbol detection errors may occur, the sequence is assumed to be found as soon as a certain number of symbols correspond to symbols determined by the sync sequence. As a reference, the determined sync sequence is stored in the sync sequence (storage) unit 240 and recalled as needed by the sync search unit 230. This method is in principle less reliable than the soft detection method; however, this drawback can be compensated by elongating the sync sequence, if desired. The advantage of this scheme over the soft detection method is that no adaptive threshold value is needed. The required length of the sync sequence can be determined by the maximum number of tolerated erroneously detected symbols in the detected sync sequence. The sync sequence should be designed such that preceding "0" data symbols (i.e. preamble symbols) will correlate the least possible with any shifted version of the sync sequence. When the sync sequence is detected, the sampling instants for the first data packet symbol are determined. A preferable sync sequence is for example the binary sequence {S*ₙ*} = {1, 1, 1, 1, 0, 1, 0, 0, 1, 1} consisting of ten data symbols. When preceding this sequence with "0" data symbols, the left half of its autocorrelation function is obtained as {..., 3, 3, 3, 4, 5, 4, 3, 3, 2, 4, 4, 5, 10}, where the integer values indicate the number of matching data symbols (bits). A preferred required minimal number of matching bits is eight as determined by the sequence detection threshold *γ_{S}* provided to the sync search unit 230; hence, two symbol (bit) errors in the received sync sequence can be tolerated, since the sequence is detected if no more than two bits within the ten bit sequence are erroneous. A false alarm occurs if at least three of five non-matching bits are erroneous or if four out of six non-matching bits are erroneous.

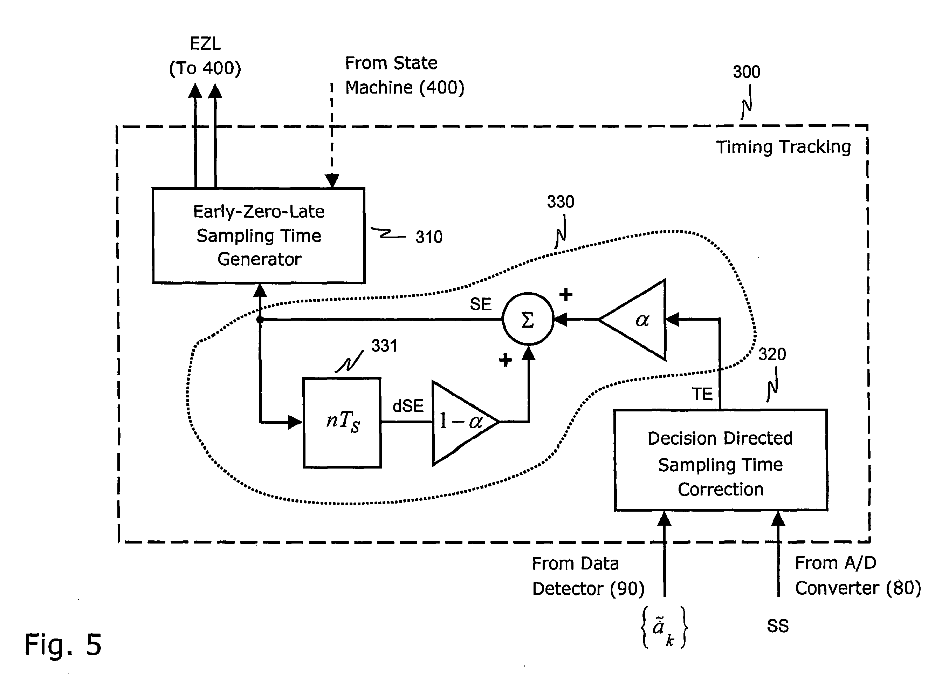

Fig. 5 shows a block diagram of the timing tracking unit 300 that comprises an early-zero-late (EZL) sampling time generator 310, a decision-directed sampling time correction unit 320, and a leaky integrator filter 330. The decision-directed sampling time correction unit 320 provides at its output an estimate of the sampling time error, hereafter also called timing error (TE), based on the data estimates provided by the data detector 90 and the sampled signal SS provided by the quantizer 80. The leaky integrator filter 330 determines by means of a leaky averaging process a smoothed version of the sampling time error, hereafter denoted by SE. The smoothed error signal SE is simultaneously fed to the input of a delay element 331 of duration nT*_{S}* that outputs a delayed smoothed error signal, hereafter abbreviated as dSE; the length of the delay time nT*_{S}*, where n ≥ 1 is and commonly understood to be an integer value, may vary for different receiver embodiments. The leaky integrator filter 330 computes the smoothed sampling time error SE according to the equation: SE = [(1 - *α*)dSE + *α*TE], where *α* is a determined positive number less than unity. The resulting smoothed timing error SE is fed to the early-late-zero time generator 310 which outputs the early-zero-late signal, herein also abbreviated as EZL signal, to control the recovered symbol clock (RSC) signal provided by a symbol clock generator comprised within the integrator/sampler control & state machine unit 400.

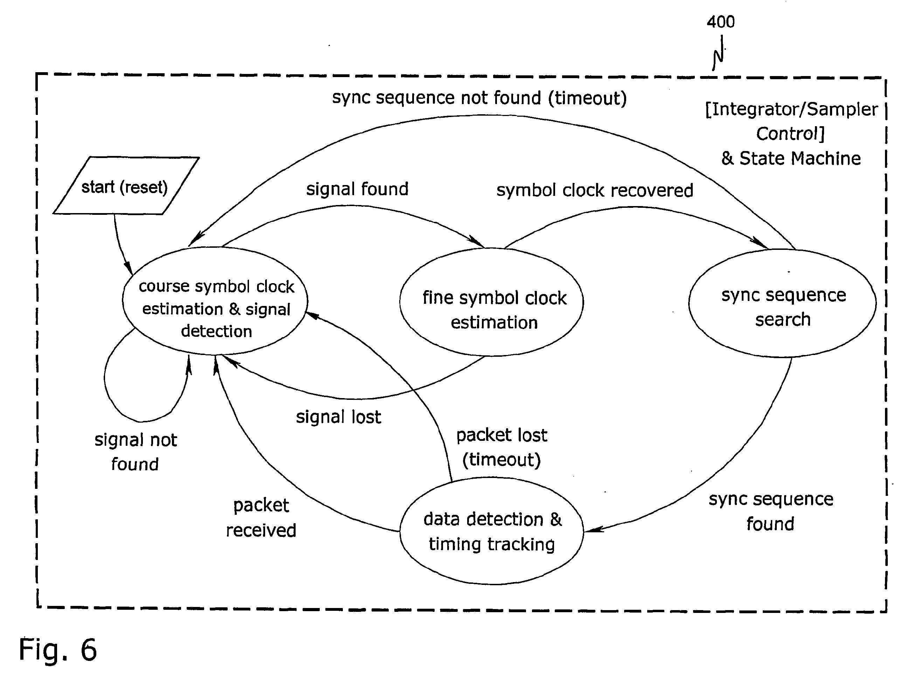

Fig. 6 shows a basic diagram of the state machine implemented within the integrator/sampler control & state machine unit 400. In this figure, the ellipses designate specific states of the state machine and the connecting arrows define the possible state transitions, where the connecting arrows are labeled with a respective event that will drive the state machine into the corresponding next state. In particular, the desired state transition sequence during the reception of a data packet (transmission signal TS) corresponds to the following sequence in time:
- A start (reset) signal drives the state machine into the state "course symbol clock estimation & signal detection," where it waits ("signal not found") for the preamble sent at the beginning of a data packet and where the course symbol clock estimation is generated;
- after the "signal (preamble) found" event has occurred, the state machine enters the state "fine symbol clock estimation" and it remains there until the symbol clock is successfully recovered;
- the even "symbols clock recovered" forwards the state machine to the state "sync sequence search" where it remains until the event "sync sequence found" has occurred;
- the state machine then enters the state "data detection & timing tracking" and remains there until the entire packet has been received ("packet received");
- after this latter event, the state machine enters again the start state ("course symbol clock estimation & signal detection"), waiting for the preamble signal of the next data packet to occur.

Note that all other events ("signal not found" ; "signal lost" ; "sync sequence not found" ; and "packet lost") drive the state machine into the "course symbol clock estimation & signal detection" state, thereby enabling the receiver to search for a new signal.

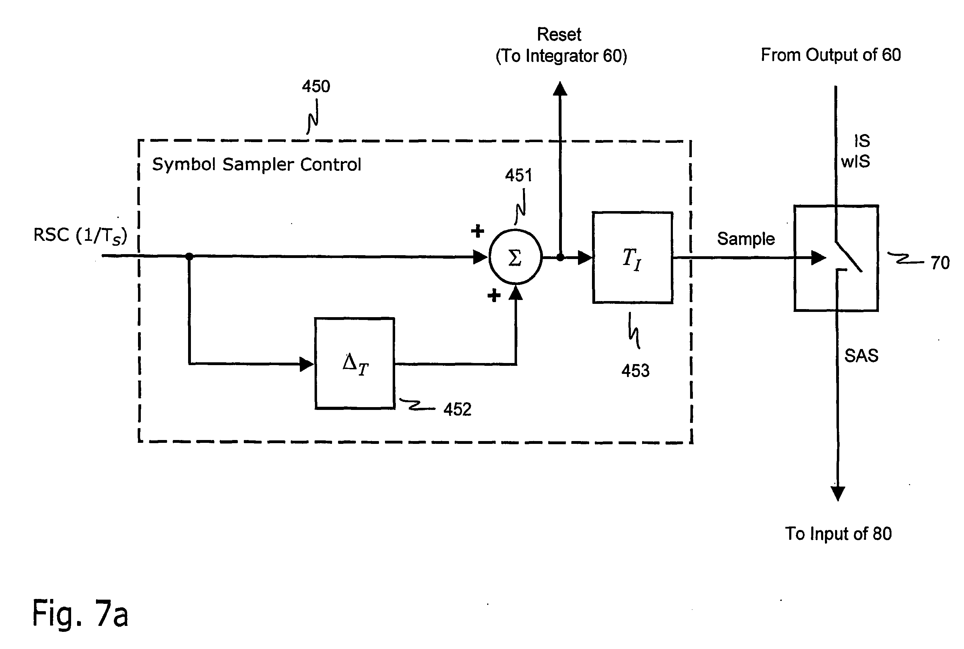

Fig. 7a shows a symbol sampler control unit 450, hereafter also called symbol sampler 450, as included within the integrator/sampler control & state machine unit 400. The symbol sampler unit 450 comprises a symbol delay (T*_{S}*) element 452 and an adder unit 451 (alternatively, the function of the adder unit 451 could also be obtained from a logic OR gate with two logic signal inputs in the form of the recovered symbol clock RSC and its delayed version obtained at the output of delay element 452). The adder's output defines the "Reset" signal that is fed to the integrator 60. The adder's output is further connected to a delay element 453, providing a duration corresponding to the integration time T_{I}. The output of the delay element 453 provides the required "Sample" signal that controls the sampler 70. The sampler's input is either the integrator signal IS, supplied by integrator 60, or the weighted integrator signal wIS, provided by a weighted integrator 60. Fig. 7b shows in more detail the general relation between the various signals provided by the symbol sampler control unit 450. In particular, Fig. 7a illustrates that both the "Reset" signal and the "Sample" signal derive from the recovered symbol clock (RSC) signal provided by a symbol clock generator located within the integrator/sampler control & state machine unit 400, where the phase of the symbol clock signal is adjustable as used by an early-zero-late (EZL) timing phase adjustment scheme.

Fig. 7b further demonstrates that within each symbol interval of duration T*_{S}*, there are two "Reset" signal pulses and two "Sample" signal pulses. As indicated in the figure, the time differences between the positive transitions of the "Reset" pulses and the positive transitions of the "Sample" pulses are identical with the integration time T*_{I}*. Provided that the integration time T*_{I}* is chosen to be smaller than the radio channel's multi-path delay spread, it will be possible to determine a numerical value for T*_{I}* that minimizes the receiver's bit error rate (BER).

In a further embodiment of the symbol sampler control unit 450 shown in Fig. 7a, either the symbol delay element 452 of duration Δ*_{T}*, e.g. as determined by the transmitter 1 based on channel state feedback from the receiver 2, or the delay element 453 of duration T_{I} or both delay elements 452, 453 can be made adjustable in response to the prevailing channel conditions. For example, if the delay element 453 of duration T*_{I}* is made adjustable, then the receiver's achievable BER can be improved in dependence of the prevailing channel delay spread and/or the receiver's signal-to-noise ratio (SNR). Note also in Fig. 7b that it is advantageous to choose the time interval Δ*_{T}* as well as the time interval (T*_{S}* - Δ*_{T}*) larger than the radio channel's multi-path delay spread; these conditions will help to avoid intersymbol interference (ISI) between adjacent symbols and thus reduce the receiver's achievable BER.

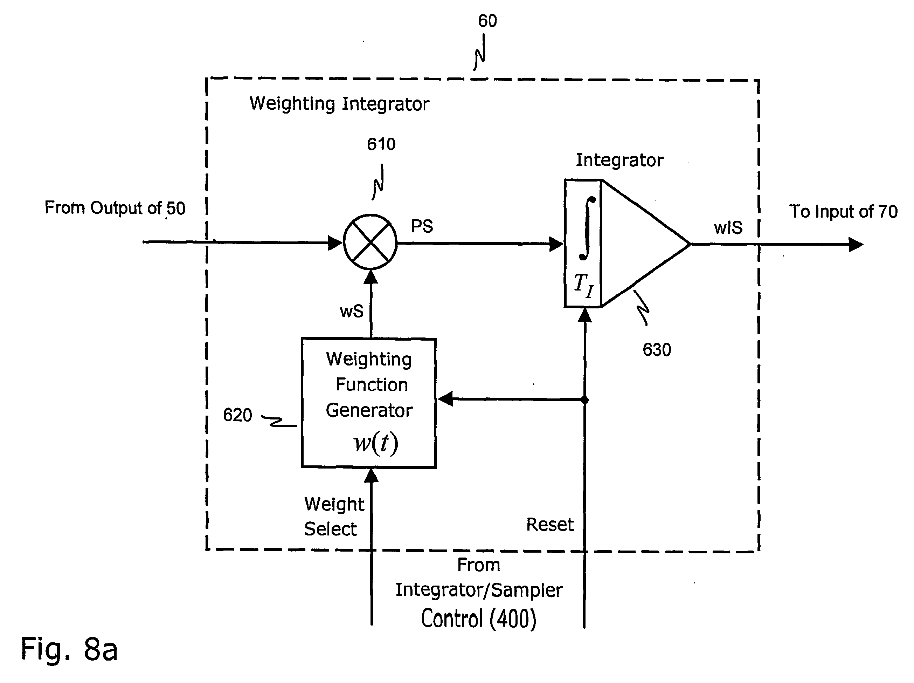

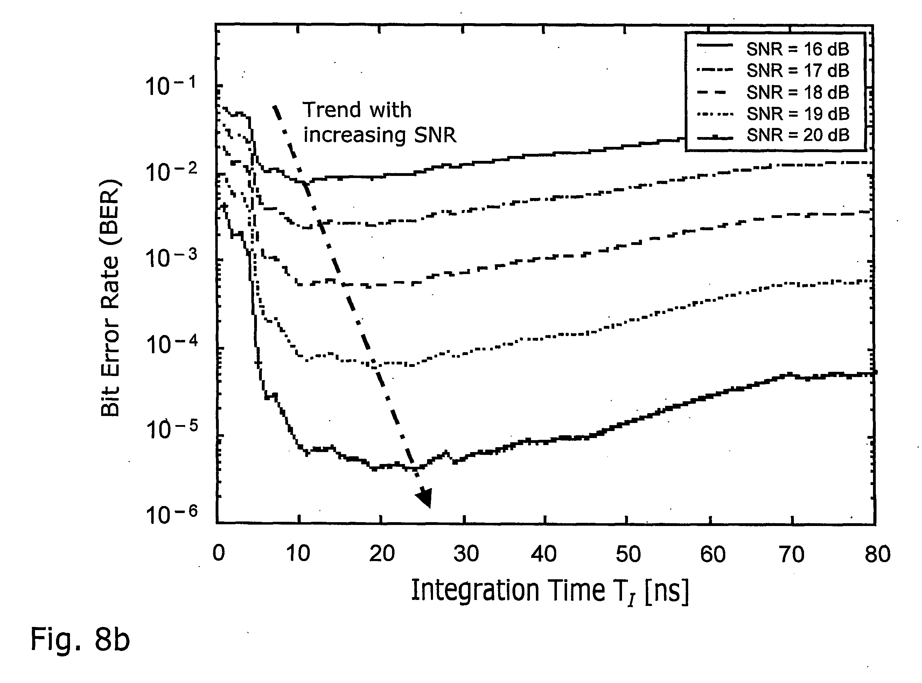

Fig. 8a shows an embodiment of the integrator 60 as a weighting integrator 60. The weighting integrator 60 comprises a weighting function generator 620, also referred to as generator 620, providing a determined weight function *w*(*t*). The integrator 60 further comprises a multiplier 610 and a weight integrator unit 630 operating under an "integrate-and-dump" scheme. In operation, the multiplier 610 multiplies the output of the first received signal path 10-50 with the determined weight function *w*(*t*)*,* in the figure labeled as a weight signal wS, to obtain a product signal PS. Upon receiving a "Reset" impulse, the weight integrator 630 then integrates the product signal PS during the integration time T*_{I}* to obtain a weighted integrator signal wIS that is provided to the sampler 70. The integration time T*_{I}* is controlled via the "Reset" signal that is provided by the integrator/sampler control & state machine unit 400. The "Weight Select" signal also provided by the integrator/sampler control & state machine unit 400 is used to select the weight signal wS supplied by the weight function generator 620. The weight function generator 620 can typically store in memory a number of weight functions *w*(*t*). For example, to cover a wide range of possible channel delay profiles, such as defined by the IEEE 802.15.3a channel modeling group for the UWB radio channels CM1 to CM4, a number of representative channel power delay profiles (PDPs) could be stored in memory, whereby any particular weight function can be recalled by the weighting function generator 620. Such a scheme could be made adaptive to provide the best possible match between the power delay profile and the prevailing power delay profile.

Alternatively, the weight function *w*(*t*) could be directly determined by the receiver 2 based on measurements performed in the receiver 2 characterizing the channel's power delay profile as measured at the out put of the first received signal path (FRSP) 10-50. The measured channel's power delay profile provides information on the actual channel state in terms of the multi-path components' amplitudes and delay times; this information can be used to construct an optimally matched weight function *w*(*t*) for use in the weighting integrator 60. Matching the weight function *w*(*t*) to the channel's prevailing power delay profile enables the receiver 2 to achieve an improved bit error rate performance (BER).

Note that the integration time T*_{I}*, which is a key characteristic of the weight integrator unit 630, can be a fixed value designed for robust receiver operation over a wide range of channel delay spreads or it can be made adjustable, for example as a function of the receiver's SNR as indicated in Fig. 8a.

In Fig. 8a it is shown that the achievable minimal bit error rate (BER) is a function of both the integration time T*_{I}* and the reciver's SNR (as indicated by the "trend line"). In this example, the BER applies to a bipolar 2PPM transmission signal TS, propagating over the 5^{th} realization of the IEEE UWB radio channel model CM4, and receiving it in the non-coherent receiver as disclosed herein.

## Claims

1. A receiver for receiving a transmission signal (TS) on a set of impulse radio (UWB) channels (3) for detecting data, each channel comprising a set of multi-path components (3a, 3b) and each multi-path component influencing a resulting bit error rate (BER), the receiver comprising:
- a first received signal path (10, 20, 30, 40, 50) adapted for receiving the transmission signal (TS);
- an integrator (60) adapted for integrating an output of the first received signal path (10, 20, 30, 40, 50) during an integration time (T*_{I}*) to obtain an integrator signal (IS, wIS), the receiver configured such that the integration time (T*_{I}*) can be chosen such as to influence the bit error rate (BER); and
- a further processing unit (99) adapted for processing the integrator signal (IS, wIS) further for detecting data,
wherein the further processing unit (99) comprises
- a sampler (70) adapted for sampling the integrator signal (IS, wIS) to a sampled analog signal (SAS);
- a quantizer (80) adapted for quantizing the sampled analog signal (SAS) to signal samples (SS);
- a data detector (90) adapted for data detection decisions; and
- a timing unit (100) adapted for controlling the sampling in dependence on the signal samples (SS) and the data detection decisions for timing estimation, wherein the timing unit (100) comprises an acquisition & synchronization unit (200) that includes a course sampling time estimation unit (210), a fine symbol clock estimation unit (220), and a synchronization sequence search unit (230), and that is configured such that signal samples (SS) provided by the quantizer 80 are fed to both the course symbol clock estimation unit (210) and the fine symbol clock estimation unit (220), where signal samples are used to generate a recovered symbol clock signal (RSC) in conjunction with a signal detection threshold (γ*_{c}*).

2. The receiver according to claim 1, wherein the integrator (60) is a weighting integrator (60) that comprises:
- a generator (620) for providing a weight function (*w*(*t*));
- a multiplier (610) for multiplying the output of the first received signal path (10, 20, 30, 40, 50) with the weight function (*w*(*t*)) to obtain a product signal (PS); and
- a weight integrator (630) for integrating the product signal (PS) during the integration time (T_{I}) to obtain a weighted integrator signal (wIS).

3. The receiver according to claim 1 or 2, wherein the timing unit (100) further comprises a timing tracking unit (300) that includes an early-zero-late time generator (310), the latter designed to implement a modified early-late gate timing scheme in the form of a three-state adjustment scheme to control the recovered symbol clock (RSC) signal.

4. The receiver according to claim 3, wherein the timing tracking unit (300) comprises a decision-directed sampling time correction unit (320).

5. The receiver according to one of claims 1 to 4, wherein the timing unit (100) further comprises an integrator/sampler control & state machine unit (400) exhibiting the functionality of a state machine.

6. The receiver according to one of the claims 1 to 5, wherein a plurality of the integrator (60) is provided as a set of parallel operating integrators, each integrator integrating their respective input signals during one of a predetermined integration time and an adjustable integration time.

7. A system for transmitting data via a set of impulse radio (UWB) channels (3a, 3b) comprising:
- a transmitter (1) for sending the data as a PAM-PPM signal; and
- a receiver (2) according to any of the claims 1 to 6 for receiving and detecting the data.

## Patentansprüche

1. Empfänger zum Empfangen eines Übertragungssignals (TS) auf einer Menge von Impulsfunk- (UWB-) Kanälen (3) zum Detektieren von Daten, wobei jeder Kanal eine Menge von Mehrweg-Komponenten (3a, 3b) umfasst und jede Mehrweg-Komponente eine resultierende Bitfehlerrate (BER) beeinflusst, wobei der Empfänger Folgendes umfasst:
- einen ersten Empfangssignalweg (10, 20, 30, 40, 50), der zum Empfangen des Übertragungssignals (TS) eingerichtet ist;
- einen Integrator (60), der zum Integrieren eines Ausgangssignals des ersten Empfangssignalwegs (10, 20, 30, 40, 50) während einer Integrationszeit (TI) eingerichtet ist, um ein Integrator-Signal (IS, wIS) zu erhalten, wobei der Empfänger so konfiguriert ist, dass die Integrationszeit (TI) in der Weise gewählt werden kann, dass sie die Bitfehlerrate (BER) beeinflusst; und
- eine Weiterverarbeitungseinheit (99), die zur Weiterverarbeitung des Integrator-Signals (IS, wIS) zum Detektieren von Daten eingerichtet ist,
wobei die Weiterverarbeitungseinheit (99) Folgendes umfasst:
- eine Abtasteinrichtung (70), die zum Abtasten des Integrator-Signals (IS, wIS) zu einem abgetasteten analogen Signal (SAS) eingerichtet ist;
- eine Quantisierungseinrichtung (80), die zum Quantisieren des abgetasteten analogen Signals (SAS) zu Signalabtastungen (SS) eingerichtet ist;
- einen Datendetektor (90), der für Datendetektionsentscheidungen eingerichtet ist; und
- eine Zeitsteuerungseinheit (100), die zum Steuern der Abtastung in Abhängigkeit von den Signalabtastungen (SS) und den Datendetektionsentscheidungen für eine Schätzung der Zeitsteuerung eingerichtet ist,
wobei die Zeitsteuerungseinheit (100) eine Erfassungs- und Synchronisationseinheit (200) umfasst, die eine Einheit (210) zur Grobschätzung der Abtastdauer, eine Einheit (220) zur Feinschätzung des Zeichentakts und eine Einheit (230) zum Suchen einer Synchronisationsfolge enthält und die eingerichtet ist, sodass Signalabtastungen (SS), die durch die Quantisierungseinrichtung (80) bereitgestellt werden, sowohl zu der Einheit (210) zur Grobschätzung des Abtastdauer als auch zu der Einheit (220) zur Feinschätzung des Zeichentakts geleitet werden, wobei Signalabtastungen verwendet werden, um in Verbindung mit einem Schwellenwert (Υ_{c}) der Signaldetektion ein wiederhergestelltes Zeichentaktsignal (RSC) zu erzeugen.

2. Empfänger nach Anspruch 1, wobei es sich bei dem Integrator (60) um einen Gewichtungsintegrator (60) handelt, der Folgendes umfasst:
- eine Erzeugungseinrichtung (620) zum Bereitstellen einer Gewichtungsfunktion (w(t));
- einen Multiplizierer (610) zum Multiplizieren des Ausgangssignals des ersten Empfangssignalwegs (10, 20, 30, 40, 50) mit der Gewichtungsfunktion (w(t)), um ein Produktsignal (PS) zu erhalten; und
- einen Gewichtungsintegrator (630) zum Integrieren des Produktsignals (PS) während der Integrationszeit (TI), um ein gewichtetes Integrator-Signal (wIS) zu erhalten.

3. Empfänger nach Anspruch 1 oder 2, wobei die Zeitsteuerungseinheit (100) ferner eine Zeitsteuerungs-Verfolgungseinheit (300) umfasst, die eine Früh-Null-Spät-Zeitpunkt-Erzeugungseinrichtung (310) enthält, die so gestaltet ist, dass sie ein modifiziertes Früh-Null-Spät-Zeitpunkt-Steuerungsschema in Form eines Drei-Zustands-Einstellungsschemas realisieren kann, um das wiederhergestellte Zeichentakt (RSC)-Signal zu steuern.

4. Empfänger nach Anspruch 3, wobei die Zeitsteuerungs-Verfolgungseinheit (300) eine durch Entscheidungen gesteuerte Abtastdauer-Korrektureinheit (320) umfasst.

5. Empfänger nach einem der Ansprüche 1 bis 4, wobei die Zeitsteuerungseinheit (100) ferner eine Integrator/Abtasteinheit-Steuerungs- und Zustandsmaschinen-Einheit (400) umfasst, die die Funktionalität einer Zustandsmaschine aufweist.

6. Empfänger nach einem der Ansprüche 1 bis 5, wobei eine Vielzahl der Integratoren (60) als eine Menge von parallel betriebenen Integratoren vorgesehen ist, wobei jeder Integrator seine entsprechenden Eingangssignale während einer vorgegebenen Integrationszeit oder einer einstellbaren Integrationszeit integriert.

7. System zum Übertragen von Daten über Impulsfunk- (UWB-) Kanäle (3a, 3b), wobei das System Folgendes umfasst:
- einen Sender (1) zum Senden der Daten als ein PAM-PPM-Signal; und
- einen Empfänger (2) nach einem der Ansprüche 1 bis 6 zum Empfangen und Detektieren der Daten.

## Revendications

1. Récepteur destiné à recevoir un signal de transmission (TS) sur un ensemble de canaux (3) radio impulsionnels (UWB) pour détecter des données, chaque canal comprenant un ensemble de composants à trajets multiples (3a, 3b) et chaque composant à trajets multiples influençant un taux d'erreurs sur les bits (BER) résultant, le récepteur comprenant :
- un premier trajet de signal reçu (10, 20, 30, 40, 50) conçu pour recevoir le signal de transmission (TS) ;
- un intégrateur (60) conçu pour intégrer un signal de sortie du premier trajet de signal reçu (10, 20, 30, 40, 50) pendant un temps d'intégration (T_{I}) pour obtenir un signal d'intégrateur (IS, wIS), le récepteur étant configuré de telle sorte que le temps d'intégration (T_{I}) peut être choisi de manière à influer sur le taux d'erreurs sur les bits (BER) ; et
- une unité de traitement plus poussé (99) conçue pour traiter le signal d'intégrateur (IS, wIS) de façon plus poussée pour détecter des données,
dans lequel l'unité de traitement plus poussé (99) comprend
- un échantillonneur (70) conçu pour échantillonner le signal d'intégrateur (IS, wIS) en un signal analogique échantillonné (SAS) ;
- un quantificateur (80) conçu pour quantifier le signal analogique échantillonné (SAS) en des échantillons de signal (SS) ;
- un détecteur de données (90) conçu pour des décisions de détection de données ; et
- une unité de cadencement (100) conçue pour commander l'échantillonnage en fonction des échantillons de signal (SS) et des décisions de détection de données pour l'estimation de cadencement,
dans lequel l'unité de cadencement (100) comprend une unité d'acquisition et de synchronisation (200) qui comporte une unité d'estimation grossière de temps échantillonnage (210), une unité d'estimation d'horloge de symbole fine (220), et une unité de recherche de séquence de synchronisation (230), et qui est configurée de telle sorte que des échantillons de signal (SS) fournis par le quantificateur 80 sont injectés à la fois dans l'unité d'estimation grossière d'horloge de symbole (210) et l'unité d'estimation d'horloge de symbole fine (220), où des échantillons de signal sont utilisés pour générer un signal d'horloge de symbole récupéré (RSC) conjointement avec un seuil de détection de signal (γ_{c}).

2. Récepteur selon la revendication 1, dans lequel l'intégrateur (60) est un intégrateur de pondération (60) qui comprend :
- un générateur (620) destiné à fournir une fonction de pondération (w(t)) ;
- un multiplicateur (610) destiné à multiplier le signal de sortie du premier trajet de signal reçu (10, 20, 30, 40, 50) avec la fonction de pondération (w(t)) pour obtenir un signal de produit (PS) ; et
- un intégrateur de pondération (630) destiné à intégrer le signal de produit (PS) pendant le temps d'intégration (T_{I}) pour obtenir un signal d'intégrateur pondéré (wIS).

3. Récepteur selon la revendication 1 ou 2, dans lequel l'unité de cadencement (100) comprend en outre une unité de suivi de cadencement (300) qui inclut un générateur de temps précoce-zéro-tardif (310), celui-ci étant conçu pour mettre en oeuvre un système de cadencement de grille précoce-tardive modifié sous la forme d'un système de réglage à trois états pour commander le signal d'horloge de symbole récupéré (RSC).

4. Récepteur selon la revendication 3, dans lequel l'unité de suivi de cadencement (300) comprend une unité de correction de temps d'échantillonnage pilotée par les décisions (320).

5. Récepteur selon l'une des revendications 1 à 4, dans lequel l'unité de cadencement (100) comprend en outre une unité de machine d'état et de commande d'intégrateur/d'échantillonneur (400) présentant la fonctionnalité d'une machine d'état.

6. Récepteur selon l'une des revendications 1 à 5, dans lequel une pluralité de l'intégrateur (60) est fournie en tant qu'ensemble d'intégrateurs fonctionnant en parallèle, chaque intégrateur intégrant ses signaux d'entrée respectifs pendant l'un d'un temps d'intégration prédéterminé et d'un temps d'intégration réglable.

7. Système pour transmettre des données par un ensemble de canaux (3a, 3b) radio impulsionnels (UWB), le système comprenant :
- un émetteur (1) pour envoyer les données en tant que signal PAM-PPM ; et
- un récepteur (2) selon l'une quelconque des revendications 1 à 6 pour recevoir et détecter les données.
